# DEMANDE DE BREVET EUROPEEN

(11) **EP 1 662 788 A1**
(43) Date de publication de la demande: **31.05.2006**
(21) Numéro de dépôt: 04106029.4
(22) Date de dépôt: 24.11.2004
(51) Int. Cl.: H04N 7/167

(54) **Unité de traitement de données audio/vidéo numériques et méthode de contrôle d'accès audites données**

(71) Demandeur: Nagravision SA, 1033 Cheseaux-sur-Lausanne (CH)
(72) Inventeur: Hill, M. Michael John, 1296 Coppet (CH); Nicoulin, M. André, 1007 Lausanne (CH); Gremaud, M. Fabien, 1030 Bussigny (CH); Puiatti, M. Jean-Michel, 1219 Chàtelaine (CH); Fischer, M. Nicolas, 1290 Versoix (CH); Moreillon, M. Guy, 1042 Bioley-Orjulaz (CH)
(74) Mandataire: Wenger, Joel-Théophile

(57) **Abrégé**

La présente invention concerne une unité de traitement de données audio/vidéo numériques et une méthode de contrôle d'accès audites données.

L'unité de traitement comprend une unité de déchiffrement (DMX) des données audio/vidéo (DT), une unité de décompression (MPEG), une interface d'entrée/sortie des données audio/vidéo traitées, et des moyens de communications vers un module de sécurité (SM). Les unités de déchiffrement (DMX) et de décompression (MPEG) comprennent respectivement une unité d'encryption (EC) et une unité de décryption (DC) disposant chacune d'au moins une clé personnelle (Kec, Kdc) et une clé (Ki) commune. L'unité de traitement est caractérisée en ce que l'unité de décryption (DC) de l'unité de décompression (MPEG) est équipée de moyens de contrôle d'accès comprenant un générateur de nombres aléatoires, des moyens de transmission pour transmettre au moins un nombre aléatoire (AL) vers le module de sécurité (SM), des moyens pour recevoir un message dudit module de sécurité (SM) encrypté par sa clé personnelle (Kdc), ce message comprenant la clé commune (Ki) et un nombre lié audit nombre aléatoire (AL) précédemment transmis, et des moyens de comparaison entre le nombre aléatoire généré et le nombre reçu.

## Description

### Domaine technique

La présente invention concerne le domaine des unités de traitement de données audio/vidéo numériques. Ces unités sont incluses dans différents équipements multimédia comme par exemple des ordinateurs personnels, des équipements mobiles ou des décodeurs de télévision numérique à péage munis de mémoires dynamiques et statiques (RAM Random Access Memory, EEPROM Electrically Erasable Programmable Read-Only Memory, disque dur, etc.). Cette invention décrit également une méthode de contrôle d'accès audites données audio/vidéo avant leur sortie vers un périphérique exploité par un utilisateur.

### Art antérieur

Une unité de traitement de données audio/vidéo numériques comme un décodeur de télévision numérique ou "set top box" comprend généralement un module principal qui regroupe plusieurs ou toutes les fonctionnalités essentielles au décryptage, à la décompression et à l'interfaçage des données audio/vidéo reçues à partir d'un réseau de diffusion câblé, hertzien, par satellite ou par une ligne téléphonique publique.

Le module comprend entre autre une unité centrale gérant une unité de déchiffrement, une unité de décompression et diverses interfaces permettant au module de communiquer avec différents périphériques externes associés au décodeur tels qu'un module de sécurité ou des appareils multimédias. La plupart de ces éléments sont connectés à un bus central interne au module. Ce bus relie également des mémoires externes pour la mémorisation temporaire des données de travail ou pour le stockage d'un contenu audio/vidéo destiné à une exploitation ultérieure.

Le processus de décryptage, par l'unité de déchiffrement, du flux de données audio/vidéo provenant du réseau de diffusion, nécessite le stockage intermédiaire de données dans une mémoire de taille relativement importante séparée du module principal. Ces données stockées peuvent être constituées par les blocs de données audio/vidéo, sont ensuite décompressées avant leur acheminement vers une interface de sortie permettant leur visualisation sur un téléviseur ou leur enregistrement sur un support magnétique ou optique tel qu'un disque dur ou un disque compact (CD Compact Disc, DVD Digital Versatile Disc ou autre).

La présence de ces données décryptées dans une mémoire séparée constitue une faille de protection des données audio/vidéo compressées. En effet, ces données peuvent être détournées et recueillies pour être traitées et distribuées par un système tiers externe dans le but d'une exploitation abusive.

De plus, des données stockées pour une utilisation future, par exemple dans un disque dur, peuvent également être reprises et reproduites sans autorisation du fournisseur, violant ainsi les prescriptions sur les droits d'auteurs.

### Description sommaire de l'invention

Le but de la présente invention est de pallier ces inconvénients en évitant que des données décryptées soient rendues accessibles à des tentatives de fraude ou de reproductions non autorisées. Autrement dit, les données décryptées ne peuvent être exploitées sans contrôle de la part du fournisseur.

Ce but est atteint par une unité de traitement de données audio/vidéo numériques comprenant une unité de déchiffrement des données audio/vidéo, une unité de décompression, une interface d'entrée/sortie des données audio/vidéo traitées, et des moyens de communications vers un module de sécurité, les unités de déchiffrement et de décompression comprenant respectivement une unité d'encryption et une unité de décryption disposant d'au moins une clé personnelle et une clé commune, caractérisée en ce que l'unité de décryption de l'unité de décompression est équipée de moyens de contrôle d'accès comprenant un générateur de nombres aléatoires, des moyens de transmission pour transmettre au moins un nombre aléatoire vers le module de sécurité, des moyens pour recevoir un message dudit module de sécurité encrypté par sa clé personnelle, ce message comprenant la clé commune et un nombre lié audit nombre aléatoire précédemment transmis, et des moyens de comparaison entre le nombre aléatoire généré et le nombre reçu.

Un module de sécurité est ici un dispositif réputé inviolable contenant diverses clés d'encryption/décryption ainsi que des données propres à un utilisateur qui définissent des droits qu'il a achetés pour l'exploitation de données audio/vidéo. Le module de sécurité peut se trouver sous différentes formes telles qu'une carte à puce insérée dans un lecteur, un circuit intégré soudé sur une carte mère, une carte du type SIM que l'on rencontre dans la téléphonie mobile etc.

Les données audio/vidéo d'un flux diffusé sont déchiffrées par l'unité de déchiffrement puis encryptées entièrement ou partiellement avec la clé commune par l'unité d'encryption associée à l'unité de déchiffrement. Ces données sont ensuite exportées de l'unité de traitement vers des unités externes tels qu'une mémoire temporaire stockant le flux provisoire en cours d'organisation destiné au décompresseur MPEG, ou tout autre périphérique interne ou externe tel qu'un port USB, Firewire ou disque dur.

Cette mémoire temporaire est constituée par une mémoire à accès aléatoire du type RAM pour le stockage temporaire de données en cours de traitement. Pour le stockage à plus long terme, les données sont acheminées vers un disque dur ou graveur DVD. Lors de la lecture de l'une ou l'autre unité de mémoire, les données sont transmises à l'unité de décompression à laquelle est associée l'unité de décryption, cette dernière nécessitant la clé commune associée audites données.

Cette clé commune peut être stockée de nombreuses manières par exemple simplement dans le module de sécurité. Selon un mode préféré de l'invention, elle est encryptée par une clé locale du module de sécurité et stockée avec les données. Le cryptogramme comprenant cette clé commune va contenir de préférence une référence à des données, par un identifiant. Lors de la décryption des données, on soumet ce cryptogramme au module de sécurité pour vérification.

Cette clé locale peut être remplacée par une clé de réseau, permettant ainsi à d'autres membres de ce réseau d'accéder au contenu du cryptogramme et en finalité, au contenu encrypté.

Dans une première étape, le module de sécurité détermine sur la base de l'identifiant, si les droits associés à ce contenu sont valides, permettant ainsi la décompression puis la visualisation des données sur un écran par exemple. Il requiert l'envoi d'un nombre aléatoire par l'unité de décryption. Une fois ce nombre reçu, le module de sécurité compose un message comprenant au moins la clé commune et le nombre aléatoire, le tout étant encrypté par la clé personnelle de l'unité de décryption.

Selon une variante de l'invention, il est effectué une fonction mathématique sur le nombre aléatoire, fonction connue de l'unité de décryption. Ainsi le nombre reçu est soit le nombre aléatoire lui-même, soit une fonction directe du nombre aléatoire. Le but étant de pouvoir s'assurer que le nombre reçu correspondant au nombre aléatoire généré par l'unité de décryption.

Lorsque ce message parvient à l'unité de décryption, il est décrypté par la clé personnelle, le nombre aléatoire reçu est comparé avec celui précédemment généré. La clé commune est utilisée que si les deux nombres sont identiques.

Lorsque ces deux nombres aléatoires diffèrent ou si le résultat de la comparaison est négatif, l'unité de décryption peut prendre plusieurs initiatives. La première consiste à bloquer immédiatement la décryption des données. Une autre initiative consiste à bloquer de manière différée c'est-à-dire après décryption d'un nombre prédéterminé de blocs de données audio/vidéo. Le blocage différé est souhaitable afin de rendre plus difficile les tentatives de détermination du nombre aléatoire, par des tiers, au moyen d'essais successifs.

Le but de cette supervision par le module de sécurité est de contrôler l'utilisation des données notamment de pouvoir déterminer le nombre de visualisation des données. Ainsi, à chaque utilisation des données, il est nécessaire solliciter le module de sécurité qui peut compter et décider de l'utilisation desdites données.

Grâce à la présence de ce nombre aléatoire dans le mécanisme de chargement de la clé commune, on empêche toute attaque de reproduction non autorisée (replay attack).

Un autre avantage de l'unité de traitement selon l'invention réside en ce qu'aucune donnée en clair n'est stockée dans la mémoire ni rendue accessible depuis l'extérieur quelle que soit l'interface utilisée.

L'encryption des données avant leur stockage dans la mémoire est effectué au moyen d'un algorithme approprié permettant un traitement à la fois rapide et sûr.

L'unité de traitement de la présente invention forme un module qui peut se trouver aussi bien dans un ordinateur personnel que dans un décodeur de télévision numérique à péage. Dans le cas de l'ordinateur, le module peut, par exemple être monté sur une carte connectée au bus principal ou directement sur la carte mère.

Dans les deux cas on dispose d'unités mémoire sous forme de mémoire à accès aléatoire (RAM) ou de disques durs. Afin d'éviter les copies non autorisées, le contenu stocké encrypté est décrypté sous contrôle du module de sécurité.

Dans le cas des décodeurs de télévision numérique, la clé commune utilisée est générée soit par le module sécurité, soit par la tête du réseau de diffusion "Head End" et transmise au moyen de messages d'administration EMM. Dans ce cas, cette clé est encryptée avec les clés personnelles du module de sécurité puis transmise audit module. Lors d'un changement de canal par exemple, la clé commune peut changer ce qui implique l'envoi d'un nouveau message d'administration EMM ou la génération d'une nouvelle clé par le module de sécurité.

Dans le cas d'un ordinateur personnel, cette clé est soit téléchargée à partir d'un serveur d'un centre de gestion, soit générée par le module de sécurité qui peut être sous la forme d'une carte à puce ou un "dongle" ou une clé électronique connectée à un port de communication de l'ordinateur personnel (port parallèle, port série USB etc.).

La présente invention concerne également une méthode de contrôle d'accès à des données audio/vidéo numériques reçues par une unité de traitement comprenant une unité de déchiffrement des données audio/vidéo, une unité de décompression, une interface d'entrée/sortie des données audio/vidéo traitées et des moyens de communication vers un module de sécurité, les unités de déchiffrement et de décompression comprenant respectivement une unité d'encryption et une unité de décryption utilisant au moins une clé personnelle et une clé d'encryption commune, ladite méthode est caractérisée en ce qu'elle comprend les étapes suivantes.
- réception d'un message de contrôle contenant un mot de contrôle par le module de sécurité,
- transmission du mot de contrôle à l'unité de déchiffrement,
- obtention par le module de sécurité d'une clé commune et encryption de ladite clé commune par la clé personnelle de l'unité d'encryption,
- transmission de ladite clé commune encryptée à l'unité d'encryption,
- déchiffrement des données audio/vidéo par le mot de contrôle et encryption desdites données déchiffrées par l'unité d'encryption avec la clé commune,
- transmission desdites données re-encryptées à l'unité de décryption,
- sélection de la clé commune spécifique aux données audio/vidéo
- requête par le module de sécurité, d'un nombre aléatoire de l'unité de décryption,
- formation d'un cryptogramme encrypté par la clé personnelle de l'unité de décryption contenant au moins la clé commune et le nombre aléatoire,
- transmission et réception du cryptogramme par l'unité de décryption, décryption dudit cryptogramme par sa clé personnelle,
- comparaison du nombre reçu avec celui précédemment généré et chargement de la clé commune si le résultat de la comparaison est positif.

### Brève description de la figure

L'invention sera mieux comprise grâce à la description détaillée qui va suivre et qui se réfère à l'unique figure annexée donnée à titre d'exemple nullement limitatif.

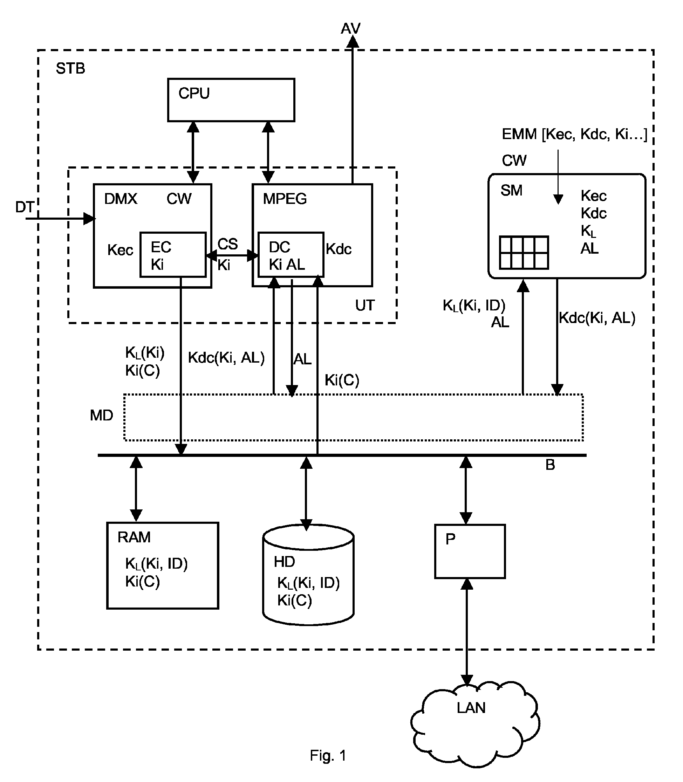

La figure 1 représente un schéma bloc d'un exemple d'unité de traitement incluse dans un décodeur de télévision numérique à péage montrant différents éléments externes à cette unité impliqués dans l'échange de données et de clés tels que les mémoires et le module de sécurité.

### Description détaillée de l'invention

La figure 1 illustre un exemple d'application de l'unité de traitement selon l'invention dans un décodeur (STB) de télévision numérique à péage. Le décodeur (STB) comprend un processeur central (CPU) chargé de gérer certaines fonctions d'une unité de déchiffrement (DMX), d'une unité de décompression (MPEG), et d'interfaces communiquant avec les mémoires (RAM; HD) et le module de sécurité (SM). L'unité de déchiffrement (DMX) sert non seulement à déchiffrer le flux de données audio/vidéo entrant, mais aussi à convertir ce flux en différent formats rendant les données qu'il contient compatibles avec les différentes applications du décodeur (STB).

Les données audio/vidéo (DT) sont reçues par l'unité de déchiffrement (DMX) qui les déchiffre à l'aide des mots de contrôle (CW) provenant des messages de contrôle (ECM). Les données déchiffrées sont ensuite encryptées par l'unité d'encryption (EC) avec une clé d'encryption commune (Ki). Les données ainsi encryptées peuvent être décryptées soit immédiatement, soit ultérieurement après stockage dans une unité mémoire telles qu'une mémoire à accès aléatoire (RAM), une mémoire non-volatile du type EEPROM ou dans un disque dur (HD). Suite à une requête, les données stockées sont acheminées vers l'unité de décryption (DC) qui est chargée de les décrypter, sous contrôle du module de sécurité (SM), avant leur décompression par l'unité de décompression (MPEG).

Un logiciel médiateur "middleware" (MD) coordonne le fonctionnement des différents logiciels gérant les unités (DMX, MPEG, EC, DC) qui peuvent être incluses dans un même module (UT). Il gère aussi les accès et les échanges de données effectués par les unités (DMX, MPEG, EC, DC) de et vers le module de sécurité (SM) et les unités mémoires (RAM, HD).

Dans un décodeur, le processeur central (CPU), considéré comme peu sûr, ne gère pas toutes les fonctions des unités d'encryption (EC) et de décryption (DC). En effet, dans le cas d'un processeur central contrôlant toutes les unités, un accès à ce processeur permettrait de le reprogrammer ou de le court-circuiter avec un émulateur externe afin effectuer l'encryption et la décryption des données avec une clé prédéterminée connue. Ainsi, pour éviter une telle intervention, plusieurs solutions peuvent être envisagées:
- Utilisation d'un processeur central (CPU) dont l'architecture repose sur une structure sécurisée du type "Trust Zone" implémentée dans la partie matérielle du coeur du processeur. Ce domaine d'exécution sécurisé permet une protection contre les attaques logicielles des mémoires internes et externes au circuit du processeur ainsi que des périphériques. Les données et le code sécurisé sont marqués et divisés au sein du processeur central maintenant une séparation matérielle distincte entre des données sécurisées et non sécurisées. Cette séparation permet au code sécurisé et aux données d'être exécutés dans un environnement restreint d'une manière sûre et efficace aux côtés d'un système d'exploitation en restant invulnérables aux attaques. Un dispositif de contrôle de sécurité commute le processeur central d'un état non-sécurisé vers un état sécurisé où le processeur accède à des niveaux de privilèges plus élevés pour exécuter du code confidentiel. Il peut ainsi effectuer des tâches telles que l'authentification, des calculs de signatures et le traitement de transactions sécurisées. Il devient alors impossible d'accéder à la sécurité du processeur central ou de la modifier par un virus ou une application non autorisée.
- Mise en oeuvre d'une architecture basée sur un système comprenant deux microprocesseurs dont le premier exécute le code sécurisé tandis que le second exécute les opérations non sécurisées. Le premier processeur est isolé d'une part de tout accès provenant de l'extérieur et d'autre part, il est protégé contre toute attaque logicielle issue par exemple d'un contrôle non autorisé du second processeur non sécurisé. Le premier processeur va générer le nombre aléatoire, recevoir le message du module de sécurité, le décrypter que charger la clé commune dans l'unité de décryption. Il est à noter que l'unité de décryption (ou d'encryption) peut être réalisée sous forme logicielle par ce premier processeur.
- Décentralisation de la gestion des clés et des processus de traitement dans l' unité de déchiffrement (DMX), respectivement dans l'unité de décompression (MPEG) par des processeurs appropriés pilotant lesdites unités indépendamment du processeur central (CPU). Les unités d'encryption (EC) et de décryption (DC) sont implémentées sous forme d'éléments matériels (hardware) dans les unités de déchiffrement (DMX) et de décompression (MPEG) incluses dans l'unité de traitement (UT). Elles peuvent également être de nature logicielle sous forme de microcode géré par le processeur dédié aux opérations sécurisées selon l'une ou l'autre des trois solutions décrites plus haut. Ces éléments logiciels sont coordonnés et leurs tâches sont attribuées par le logiciel médiateur "middleware" (MD).

La mémoire (RAM) à accès aléatoire peut être similaire à celle utilisée dans les ordinateurs personnels, comme par exemple une mémoire du type SDRAM (Synchronous Dynamic Random Access Memory) ou du type SRAM (Static Random Access Memory) bénéficiant d'un temps d'accès plus rapide.

Selon un exemple de configuration, le décodeur peut comporter un bus (B) auquel peuvent être connectées plusieurs types d'unités de stockage comme la mémoire à accès aléatoire (RAM), une mémoire programmable effaçable (EEPROM) ou Flash EEPROM, ou un plusieurs disques durs (HD). De plus, les données audio/vidéo encryptées peuvent être acheminées vers un réseau local (LAN) via le bus (B) et un port (P) pour être exploitées par d'autres décodeurs ou unités de traitement. La sécurité de ces données est assurée par leur encryption avec la clé commune (Ki). Les unités de traitement ou décodeurs connectés à ce réseau (LAN) sont équipés pour gérer et décrypter les données audio/vidéo en fonction des droits stockés dans leur module de sécurité.

Afin d'optimiser la vitesse de traitement, l'encryption au niveau de l'unité d'encryption (EC) est généralement effectuée avec un algorithme rapide entraînant un processus de mélanges de blocs et/ou d'adresses. Par exemple les blocs de données peuvent être codés au moyen d'une fonction XOR (ou exclusif) dont les paramètres sont déterminés par la clé commune (Ki). Une fonction similaire peut également coder les adresses mémoire attribuées aux différents blocs à stocker. Une autre méthode d'encryption consiste à coder l'ordre dans lequel les blocs sont stockés dans la mémoire au moyen de la clé commune (Ki). Ce type de mélange d'adressage peut être aisément réalisé par un circuit FPLA (Field Programmable Logic Array) incorporé dans l'unité d'encryption (EC). Bien entendu, d'autres algorithmes plus sophistiqués peuvent être utilisés pour cette encryption.

L'encryption avec la clé commune (Ki) ne peut être que partielle c'est-à-dire ne concerner qu'une partie des blocs de données à stocker ou qu'une partie des adresses mémoires auxquelles ces blocs seront stockés. De préférence, l'encryption portera sur les données destinées à l'utilisateur final (payload) telles que les images et le son et non pas sur les entêtes des paquets de données ou les tables servant au traitement de celles-ci.

Dans une première variante, la clé d'encryption commune (Ki) est transmise par un centre de gestion ou par la tête du réseau de diffusion (Head End) au moyen d'un message d'administration (EMM). Ce message (EMM) contenant également les droits de déchiffrement des données audio/vidéo propres à chaque utilisateur est traité par le module de sécurité (SM) en général sous forme d'une carte à puce insérée dans un lecteur approprié du décodeur (STB). Cette clé d'encryption commune (Ki) est susceptible de changer à chaque changement de canal de diffusion ce qui implique que le nouveau message d'administration (EMM) diffusé contiendra une nouvelle clé commune (Ki).

Selon une variante utilisée lorsque l'on souhaite réduire le nombres de messages transmis par le centre de gestion ou la tête de réseau "Head End", la clé commune Ki peut être générée par le module de sécurité (SM). Ce processus est exécuté indépendamment des messages d'administration (EMM) pourvu que les droits inclus dans ces derniers soient valides et permettent le déchiffrement des données (DT) par l'unité de déchiffrement (DMX). En effet, le module de sécurité (SM), du fait qu'il reçoit les messages de contrôle ECM comprenant les mots de contrôle (CW) inclus dans le flux des données (DT) audio/vidéo, dispose de l'information d'un changement de canal ce qui lui permet de générer une nouvelle clé commune (Ki).

A la réception de données audio/vidéo (DT) l'unité de déchiffrement (DMX) les déchiffre avec un mot de contrôle (CW) que le module de sécurité (SM) extrait d'un message de contrôle ECM. Ce mot de contrôle (CW) est transmis à l'unité de déchiffrement (DMX) soit en clair, soit encrypté par la clé personnelle Kec de l'unité d'encryption (EC) ou par une autre clé mise à disposition de l'unité de déchiffrement (DMX) par le logiciel médiateur "middleware" (MD).

Parallèlement, le module de sécurité obtient une clé commune (Ki) et encrypte celle-ci avec la clé personnelle (Kec) de l'unité d'encryption (EC). La clé (Ki) provient soit d'un message d'administration (EMM), soit du module de sécurité lui-même qui la génère, comme décrit plus haut.

Ce cryptogramme Kec(Ki) est transmis à l'unité d'encryption (EC) qui en extrait la clé commune (Ki) et avec laquelle elle re-encrypte les données déchiffrées par l'unité de déchiffrement (DMX).

Selon une variante préférée, la méthode de contrôle d'accès à des données (DT) audio/vidéo numériques reçues par une unité de traitement (UT) comprenant une unité de déchiffrement (DMX) des données audio/vidéo, une unité de décompression (MPEG), une interface d'entrée/sortie des données audio/vidéo traitées et des moyens de communication vers un module de sécurité (SM), les unités de déchiffrement (DMX) et de décompression (MPEG) comprenant respectivement une unité d'encryption (EC) et une unité de décryption (DC) utilisant au moins une clé personnelle (Kec, Kdc) et une clé d'encryption commune (Ki), est caractérisée en ce qu'elle comprend les étapes suivantes :
- réception d'un message de contrôle (ECM) contenant un mot de contrôle (CW) par le module de sécurité (SM),
- obtention par le module de sécurité d'une clé commune Ki et génération d'un cryptogramme Kec(Ki, CW, H(Ki, CW)) encrypté avec la clé personnelle Kec de l'unité d'encryption (EC) comprenant la clé commune (Ki), le mot de contrôle (CW), et une première empreinte H(Ki, CW).
- transmission du cryptogramme Kec(Ki, CW, H(Ki, CW)) à l'unité de déchiffrement (DMX) décryption avec la clé Kec dudit cryptogramme et vérification de l'intégrité de la clé commune Ki et du mot de contrôle CW.
- chargement de la clé commune (Ki) dans l'unité d'encryption (EC) et autorisation du déchiffrement des données audio/vidéo avec le mot de contrôle (CW) lorsque le résultat de la vérification est positif.
- déchiffrement des données audio/vidéo et encryption desdites données par l'unité d'encryption (EC) avec la clé commune (Ki),
- transmission desdites données re-encryptées à l'unité de décryption (DC),
- sélection par le module de sécurité de la clé commune (Ki) spécifique aux données audio/vidéo,
- requête par le module de sécurité (SM), d'un nombre aléatoire (AL) de l'unité de décryption (DC),
- formation puis transmission d'un cryptogramme Kdc(Ki, AL, H(Ki, AL)) encrypté avec la clé personnelle (Kdc) de l'unité de décryption (DC) contenant au moins la clé commune, (Ki) le nombre aléatoire (AL), et une seconde empreinte H(Ki, AL),
- réception du cryptogramme Kdc(Ki, AL, H(Ki, AL)) par l'unité de décryption (DC),
- décryption dudit cryptogramme avec la clé personnelle Kdc de ladite l'unité de décryption (DC) et vérification de l'intégrité de la clé commune (Ki) et du nombre aléatoire (AL).
- lorsque le résultat de la vérification est positif, comparaison du nombre aléatoire (AL) reçu avec celui précédemment généré,
- chargement de la clé commune (Ki) et décryption des données audio/vidéo si le résultat de la comparaison est positif.

Le module de sécurité (SM) transmet la clé commune (Ki) avec le mot de contrôle (CW) le tout encrypté par la clé personnelle (Kec) à l'unité de déchiffrement (DMX) et à l'unité d'encryption (EC). Afin d'assurer son intégrité, ce cryptogramme Kec(Ki, CW) peut aussi inclure une empreinte H(Ki, CW) constituant un code d'authentification ou MAC (Message Authentication Code). Ce code est calculé à partir de la clé commune (Ki) et du mot de contrôle (CW), en général, avec une fonction de hachage unidirectionnelle du type MD2, MD4, MD5 (Message Digest) ou SHA, (Secure Hash Algorithm). A la réception du cryptogramme Kec(Ki, CW, H(Ki, CW)), le processeur sécurisé le décrypte avec la clé (Kec) puis calcule une empreinte H(Ki, CW))' à partir de la clé (Ki) et du mot de contrôle (CW) reçus et la compare avec l'empreinte H(Ki, CW) reçue. La clé (Ki) et le mot de contrôle (CW) ne seront reconnus comme valides seulement si la comparaison de l'empreinte H(Ki, CW))' calculée avec celle H(Ki, CW) reçue donne un résultat positif. Le processeur sécurisé est alors autorisé à charger le mot de contrôle dans l'unité de déchiffrement (DMX) ainsi que la clé commune dans l'unité d'encryption (EC). Ceci permet de déchiffrer les données audio/vidéo avec le mot de contrôle (CW) et encrypter les données déchiffrée par l'unité de d'encryption (EC).

Un avantage du couplage de la clé commune (Ki) avec le mot de contrôle (CW) est qu'il devient impossible de croiser deux flux entrant dans un décodeur équipé de deux systèmes de réception ou "tuner". La clé commune Ki d'un flux autorisant une décryption gratuite ne pourra pas remplacer la clé commune Ki d'un flux comportant des droits restreints. Le croisement des deux messages aurait pour conséquence que les mots de contrôle seront également croisés. Un autre mot de contrôle que celui attendu a pour résultat de rendre le déchiffrement caduc.

Cette variante est particulièrement pertinente lorsque l'on charge la clé d'encryption et de décryption lors d'une même opération. En mode direct, il est possible de ne pas appliquer le protocole mettant en oeuvre un aléa pour charger la clé commune dans l'unité de décryption (DC). Le processeur sécurisé, en charge des opérations de sécurité dans l'unité de traitement de l'invention, reçoit un message encrypté par sa clé personnelle contenant le mot de contrôle et la clé commune Ki. Cette clé est chargée simultanément dans l'unité d'encryption et l'unité de décryption. Afin de s'assurer que la bonne clé a été chargée et non qu'un programme interface a remplacé un message par un autre, la présence du mot de contrôle interdit tout changement de message. Si l'on veut obtenir le flux en clair, seul le message original pourra être utilisé.

Il est à noter que dans une implémentation mettant en oeuvre un processeur sécurisé ou un processeur central disposant d'un mode sécurisé, la clé personnelle (Kec) de l'unité d'encryption (EC) et de l'unité de décryption (DC) est identique et est en fait la clé personnelle du processeur sécurisé.

Les données re-encryptées par l'unité d'encryption (EC) avec la clé commune (Ki) sont par exemple stockées dans un disque dur (HD) ou dans une mémoire non-volatile (EEPROM) pour être décryptées ultérieurement. Le module de sécurité (SM) crée un cryptogramme K_{L}(Ki, ID) composé par la clé commune (Ki) et un identifiant (ID) du contenu (C), le tout encrypté par une clé locale (K_{L}) du module de sécurité (SM). Ce cryptogramme peut être stocké soit sur le disque dur (HD) avec le contenu encrypté avec la clé commune (Ki), soit dans le module de sécurité (SM) ou dans une mémoire séparée.

Il est à noter que ce cryptogramme peut être encrypté avec d'autres clés personnelles comme par exemple la clé personnelle (Kec) de l'unité d'encryption (EC) ou celle (Kdc) de l'unité de décryption (DC) qui sont connues du module de sécurité (SM).

Ces données re-encryptées peuvent également être acheminées vers un réseau local (LAN) via le port (P) pour leur traitement, visualisation immédiate ou différée. Dans ce dernier cas, les données sont stockées dans un disque dur ou autre unité mémoire d'une unité de traitement ou décodeur membre du réseau local (LAN). Leur décryption sera donc effectuée par une unité de traitement ou décodeur différent de celui qui les a encryptées.

Lors de la lecture du contenu encrypté Ki(C) stocké sur le disque dur (HD), le cryptogramme K_{L}(Ki, ID) est transmis par le logiciel médiateur "middleware" (MD) au module de sécurité (SM) qui le décrypte en utilisant la clé (K_{L}) pour en extraire l'identifiant (ID). Celui-ci est interprété par le module de sécurité qui détermine un paramètre relatif à l'exploitation des données audio/vidéo stockées correspondant, par exemple, au nombre de lectures autorisées du contenu (C) une fois décrypté. Puis le module de sécurité (SM) envoie une commande à l'unité de décryption (DC) qui génère un nombre aléatoire ou aléa (AL) et le transmet au module de sécurité (SM). Ce dernier prépare nouveau cryptogramme Kdc(Ki, AL) composé de l'aléa (AL) et de la clé commune (Ki) préalablement extraite du cryptogramme K_{L}(Ki, ID), le tout encrypté par la clé personnelle (Kdc) de l'unité de décryption (DC). Ce cryptogramme Kdc(Ki, AL) est transmis à l'unité de décryption (DC) qui le décrypte avec sa clé personnelle (Kdc). L'aléa (AL) reçu et extrait du cryptogramme Kdc(Ki, AL) est alors comparé avec l'aléa (AL) généré précédemment. Si les deux aléas (AL) correspondent, la clé commune (Ki) est considérée comme valide. Elle est alors chargée dans l'unité de décryption (DC) qui obtient ainsi le contenu (C) en clair. L'unité de décompression (MPEG) décompresse le contenu (C) obtenu et le convertit en un signal audio/vidéo (AV) analogique du type bande de base (vidéo composite, RGB) compatible avec un téléviseur par exemple.

Selon une variante le nombre aléatoire (AL) généré par l'unité de décryption (DC) peut être transmis sous forme encryptée avec la clé personnelle (Kdc) de ladite unité de décryption (DC). Le module de sécurité (SM) possédant cette clé personnelle Kdc pourra décrypter l'aléa (AL) pour former le cryptogramme Kdc(Ki, AL). Afin d'assurer son intégrité, le nombre aléatoire (AL) peut également être transmis accompagné d'une empreinte H(AL) calculée à partir dudit nombre aléatoire (AL), cet ensemble étant encrypté avec la clé personnelle (Kdc) de l'unité de décryption (DC).

Selon une autre variante, le cryptogramme Kdc(Ki, AL) inclut une empreinte H(Ki, AL) calculée par le module de sécurité (SM) à partir de la clé commune (Ki) et du nombre aléatoire (AL) pour former le cryptogramme Kdc(Ki, AL, H(Ki, AL)). Lorsque ce cryptogramme est reçu par l'unité de décryption (DC), celle-ci vérifie d'abord l'empreinte H(Ki, AL) par comparaison avec une empreinte H(Ki, AL)' qu'elle calcule avec la clé (Ki) et le nombre (AL) extraits du cryptogramme et l'empreinte H(Ki, AL) extraite du cryptogramme. Si les résultats de cette comparaison et celle des nombres aléatoires (AL), comme décrit plus haut, sont positifs, la clé commune (Ki) est chargée dans l'unité de décryption (DC) et la décryption du contenu peut s'exécuter.

Dans une variante, le cryptogramme K_{L}(Ki, ID) accompagnant le contenu Ki(C) stocké peut inclure d'autres informations relatives au contenu (C) comme par exemple un titre T, la durée D ou un code N décrivant le type de contenu (sport, film, reportage etc...). Le cryptogramme peut être symbolisé par K_{L}(Ki, ID, T, D, N).

L'avantage d'un tel cryptogramme K_{L}(Ki, ID, T, D, N) est la possibilité de gérer les droits d'un contenu en fonction de sa nature et du temps. En effet, l'identifiant (ID), et le code (N) par exemple, permet au module de sécurité de limiter le nombre de visualisations.

Lors de la visualisation directe ou "live" d'un contenu c'est-à-dire sans enregistrement durable dans une unité mémoire, l'unité de traitement déchiffre le contenu à l'aide du mot de contrôle (CW), puis l'encrypte avec la clé commune (Ki) pour le décrypter directement avant la décompression. Lors d'une première étape, le module de sécurité (SM) stocke le mot de contrôle (CW) et un identifiant (ID) du contenu (C) pour déterminer si la décryption avec la clé commune (Ki) peut avoir lieu ou non suivant les droits contenus dans le module de sécurité (SM).

Dans ce mode "live", la clé commune (Ki), obtenue par le module de sécurité (SM), est transmise à la fois à l'unité d'encryption (EC) et à l'unité de décryption (DC). Cette clé Ki est transmise soit sous forme encryptée avec les clés personnelles (Kec, Kdc) des unités respectives (EC, DC), soit encryptée avec la clé (Kec) de l'unité d'encryption (EC) uniquement. Dans ce dernier cas, elle est transmise à l'unité de décryption (DC) par une connexion (CS) matérielle directe sécurisée reliant ladite unité de décryption (DC) à l'unité d'encryption (EC). L'étape de contrôle utilisant le nombre aléatoire (AL) comme dans le mode de lecture de données stockées n'est alors plus nécessaire car l'unité de décryption (DC) reçoit la clé (Ki) d'une source sûre.

## Revendications

1. Unité de traitement de données audio/vidéo numériques comprenant une unité de déchiffrement (DMX) des données audio/vidéo (DT), une unité de décompression (MPEG), une interface d'entrée/sortie des données audio/vidéo traitées, et des moyens de communications vers un module de sécurité (SM), les unités de déchiffrement (DMX) et de décompression (MPEG) comprenant respectivement une unité d'encryption (EC) et une unité de décryption (DC) disposant chacune d'au moins une clé personnelle (Kec, Kdc) et une clé (Ki) commune, **caractérisée en ce que** l'unité de décryption (DC) de l'unité de décompression (MPEG) est équipée de moyens de contrôle d'accès comprenant un générateur de nombres aléatoires, des moyens de transmission pour transmettre au moins un nombre aléatoire (AL) vers le module de sécurité (SM), des moyens pour recevoir un message dudit module de sécurité (SM) encrypté par sa clé personnelle (Kdc), ce message comprenant la clé commune (Ki) et un nombre lié audit nombre aléatoire (AL) précédemment transmis, et des moyens de comparaison entre le nombre aléatoire généré et le nombre reçu.

2. Unité de traitement selon la revendication 1, **caractérisée en ce qu'**elle comprend des moyens de blocage immédiat ou différé de l'unité de décryption (DC) lorsque le résultat de la comparaison est négatif.

3. Unité de traitement selon la revendication 1, **caractérisée en ce qu'**elle comprend un processeur comportant un domaine d'exécution sécurisé implémenté dans la partie matérielle du coeur dudit processeur, les données et le code sécurisé étant marqués et divisés, maintenant une séparation matérielle distincte entre des données sécurisées et non sécurisées dans ladite unité de traitement.

4. Unité de traitement selon les revendications 1 à 3, **caractérisée en ce qu'**elle forme un module intégré dans un ordinateur personnel.

5. Unité de traitement selon les revendications 1 à 3, **caractérisée en ce qu'**elle forme un module intégré dans un décodeur de télévision à péage.

6. Méthode de contrôle d'accès à des données (DT) audio/vidéo numériques reçues par une unité de traitement (UT) comprenant une unité de déchiffrement (DMX) des données audio/vidéo, une unité de décompression (MPEG), une interface d'entrée/sortie des données audio/vidéo traitées et des moyens de communication vers un module de sécurité (SM), les unités de déchiffrement (DMX) et de décompression (MPEG) comprenant respectivement une unité d'encryption (EC) et une unité de décryption (DC) utilisant chacune une clé personnelle (Kec, Kdc) et une clé d'encryption commune (Ki), ladite méthode est **caractérisée en ce qu'**elle comprend les étapes suivantes :
- réception d'un message de contrôle (ECM) contenant un mot de contrôle (CW) par le module de sécurité (SM),
- transmission du mot de contrôle (CW) à l'unité de déchiffrement (DMX),
- obtention par le module de sécurité d'une clé commune Ki et encryption de ladite clé commune Ki par la clé personnelle Kec de l'unité d'encryption (EC),
- transmission de ladite clé commune Ki encryptée à l'unité d'encryption (EC),
- déchiffrement des données audio/vidéo par le mot de contrôle (CW) et encryption desdites données déchiffrées par l'unité d'encryption (EC) avec la clé commune (Ki),
- transmission desdites données re-encryptées à l'unité de décryption (DC),
- sélection de la clé commune (Ki) spécifique aux données audio/vidéo par le module de sécurité,
- requête par le module de sécurité (SM), d'un nombre aléatoire (AL) de l'unité de décryption (DC),
- formation d'un cryptogramme Kdc(Ki, AL) encrypté par la clé personnelle (Kdc) de l'unité de décryption (DC) contenant au moins la clé commune (Ki) et le nombre aléatoire (AL),
- transmission et réception du cryptogramme Kdc(Ki, AL) par l'unité de décryption (DC), décryption dudit cryptogramme par sa clé personnelle (Kdc),
- comparaison du nombre aléatoire (AL) reçu avec celui précédemment généré, chargement de la clé commune Ki et décryption des données audio/vidéo si le résultat de la comparaison est positif.

7. Méthode selon la revendication 6 **caractérisée en ce que** le module de sécurité (SM) encrypte le mot de contrôle CW avec la clé personnelle (Kec) de l'unité d'encryption (EC) avant la transmission à l'unité de déchiffrement (DMX).

8. Méthode selon la revendication 6 **caractérisée en ce que** lorsque le résultat de la comparaison est négatif, l'unité de décryption (DC) est bloquée soit immédiatement, soit après décryption d'un nombre prédéterminé de blocs de données audio/vidéo.

9. Méthode selon la revendication 6 **caractérisée en ce que** les données déchiffrées et re-encryptées par la clé commune (Ki) sont stockées dans une unité mémoire (RAM, HD), leur décryption étant effectuée ultérieurement.

10. Méthode selon la revendication 6 **caractérisée en ce que** les données déchiffrées et re-encryptées par la clé commune (Ki) sont acheminées vers réseau local (LAN), via un port (P) de l'unité de traitement, leur décryption immédiate ou différée étant effectuée par une unité de traitement membre dudit réseau local (LAN).

11. Méthode de contrôle d'accès à des données (DT) audio/vidéo numériques reçues par une unité de traitement (UT) comprenant une unité de déchiffrement (DMX) des données audio/vidéo, une unité de décompression (MPEG), une interface d'entrée/sortie des données audio/vidéo traitées et des moyens de communication vers un module de sécurité (SM), les unités de déchiffrement (DMX) et de décompression (MPEG) comprenant respectivement une unité d'encryption (EC) et une unité de décryption (DC) utilisant au moins une clé personnelle (Kec, Kdc) et une clé d'encryption commune (Ki), est **caractérisée en ce qu'**elle comprend les étapes suivantes :
- réception d'un message de contrôle (ECM) contenant un mot de contrôle (CW) par le module de sécurité (SM),
- obtention par le module de sécurité d'une clé commune Ki et génération d'un cryptogramme Kec(Ki, CW, H(Ki, CW)) encrypté avec la clé personnelle Kec de l'unité d'encryption (EC) comprenant la clé commune (Ki), le mot de contrôle (CW), et une première empreinte H(Ki, CW).
- transmission du cryptogramme Kec(Ki, CW, H(Ki, CW)) à l'unité de déchiffrement (DMX) décryption avec la clé Kec dudit cryptogramme et vérification de l'intégrité de la clé commune Ki et du mot de contrôle CW.
- chargement de la clé commune (Ki) dans l'unité d'encryption (EC) et autorisation du déchiffrement des données audio/vidéo avec le mot de contrôle (CW) lorsque le résultat de la vérification est positif.
- déchiffrement des données audio/vidéo et encryption desdites données par l'unité d'encryption (EC) avec la clé commune (Ki),
- transmission desdites données re-encryptées à l'unité de décryption (DC),
- sélection par le module de sécurité de la clé commune (Ki) spécifique aux données audio/vidéo,
- requête par le module de sécurité (SM), d'un nombre aléatoire (AL) de l'unité de décryption (DC),
- formation puis transmission d'un cryptogramme Kdc(Ki, AL, H(Ki, AL)) encrypté avec la clé personnelle (Kdc) de l'unité de décryption (DC) contenant au moins la clé commune, (Ki) le nombre aléatoire (AL), et une seconde empreinte H(Ki, AL),
- réception du cryptogramme Kdc(Ki, AL, H(Ki, AL)) par l'unité de décryption (DC),
- décryption dudit cryptogramme avec la clé personnelle Kdc de ladite l'unité de décryption (DC) et vérification de l'intégrité de la clé commune (Ki) et du nombre aléatoire (AL).
- lorsque le résultat de la vérification est positif, comparaison du nombre aléatoire (AL) reçu avec celui précédemment généré,
- chargement de la clé commune (Ki) et décryption des données audio/vidéo si le résultat de la comparaison est positif.

12. Méthode selon la revendication 11 **caractérisée en ce que** lorsque le résultat de la comparaison est négatif, l'unité de décryption (DC) est bloquée soit immédiatement, soit après décryption d'un nombre prédéterminé de blocs de données audio/vidéo.

13. Méthode selon la revendication 11 **caractérisée en ce que** la première empreinte H(Ki, CW) et la seconde empreinte H(Ki, AL) constituent respectivement un premier code d'authentification calculé à partir de la clé commune (Ki) et du mot de contrôle (CW) et un second code d'authentification calculé à partir de la clé commune (Ki) et du nombre aléatoire (AL), lesdits codes étant calculés avec une fonction de hachage unidirectionnelle.

14. Méthode selon la revendication 11 **caractérisée en ce que** les données déchiffrées et re-encryptées par la clé commune (Ki) sont stockées dans une unité mémoire (RAM, HD), leur décryption étant effectuée ultérieurement.

15. Méthode selon la revendication 11 **caractérisée en ce que** les données déchiffrées et re-encryptées par la clé commune (Ki) sont acheminées vers un réseau local (LAN), via un port (P) de l'unité de traitement, leur décryption immédiate ou différée étant effectuée par une unité de traitement membre dudit réseau local (LAN).
